(19) Europäisches Patentamt
European Patent Office
Office européen des brevets

(11) **EP 3 112 054 B1**

(12) **EUROPEAN PATENT SPECIFICATION**

(45) Date of publication and mention
of the grant of the patent:
**01.04.2020 Bulletin 2020/14**

(51) Int Cl.:
**B22D 41/32** *(2006.01)*     **B22D 11/10** *(2006.01)*
**C04B 35/103** *(2006.01)*

(21) Application number: **15755886.7**

(22) Date of filing: **25.02.2015**

(86) International application number:
**PCT/JP2015/055388**

(87) International publication number:
**WO 2015/129745 (03.09.2015 Gazette 2015/35)**

(54) **REFRACTORY FOR STEEL CASTING, PLATE FOR SLIDING NOZZLE DEVICE, AND METHOD FOR PRODUCING REFRACTORY FOR STEEL CASTING**

FEUERFESTES MATERIAL FÜR STAHLGUSS, PLATTE FÜR SCHIEBEDÜSENVORRICHTUNG UND VERFAHREN ZUR HERSTELLUNG VON FEUERFESTEM MATERIAL FÜR STAHLGUSS

RÉFRACTAIRE POUR COULÉE D'ACIER, PLAQUE POUR DISPOSITIF DE BUSE COULISSANT, ET PROCÉDÉ DE PRODUCTION DE RÉFRACTAIRE POUR COULÉE D'ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 JP 2014039084**

(43) Date of publication of application:
**04.01.2017 Bulletin 2017/01**

(73) Proprietor: **Krosakiharima Corporation**
**Kitakyushu-shi**
**Fukuoka 806-8586 (JP)**

(72) Inventors:
• **MAKINO, Taro**
**Kitakyushu-shi**
**Fukuoka 806-8586 (JP)**
• **ITO, Kazuo**
**Kitakyushu-shi**
**Fukuoka 806-8586 (JP)**
• **AKAMINE, Keiichiro**
**Kitakyushu-shi**
**Fukuoka 806-8586 (JP)**

(74) Representative: **Vossius & Partner**
**Patentanwälte Rechtsanwälte mbB**
**Siebertstrasse 3**
**81675 München (DE)**

(56) References cited:
**WO-A1-2009/119683**    **JP-A- S55 107 749**
**JP-A- 2000 094 121**    **JP-A- 2000 094 121**
**JP-A- 2012 200 733**    **JP-B2- S6 029 664**

**Description**

[Technical Field]

The present invention relates to a refractory for steel casting, a plate for a sliding nozzle device using the refractory, and a method for producing the refractory.

[Background Art]

A plate for a sliding nozzle device (hereinafter, this is referred to as "sliding nozzle plate", and a refractory for this plate is referred to as "plate refractory") is being widely employed in a steel industry as an essential refractory product for a flow control member of a melted metal in the present time when the secondary processing and continuous casting in a ladle have been generalized. This sliding nozzle plate is a component which plays a role to control a flow of a melted metal including a melted steel, so that the sliding nozzle plate is required to have a very high performance, and also in a material quality, the sliding nozzle plate is required to have well-balanced superior properties which can cope with various harsh conditions. That is, the sliding nozzle plate receives not only physical actions including an abrasion and a sudden thermal shock due to a flow of a melted metal, but also a chemical invasion due to a melted metal, a melted slag, and the like (corrosion), an invasion due to a combined chemical and physical actions (erosion), and the like; and therefore, a product having excellent properties in the thermal shock resistance, the abrasion resistance, the corrosion and erosion resistances, the strength, and the like are required as necessary characteristics to be possessed. In order to furnish the sliding nozzle plate with the above-mentioned properties in a well-balanced fashion, an alumina-carbon based refractory which has a highest stability in a tolerance is being widely used.

With regard to the method for improving the thermal shock resistance, a large amount of raw material having a low thermal expansion coefficient, which includes a siliceous material, a silicon carbide material, and a carbonaceous material, is generally used; however, because the raw material including the siliceous material, the silicon carbide material, and the carbonaceous material readily reacts with a melted steel or forms a compound having a low melting point, there has been a problem of deterioration of the corrosion and erosion resistances. Accordingly, many proposals have been made with regard to the plate refractory.

For example, in Patent Document 1, a proposal is made with regard to a baked plate refractory which is produced by adding to a fire resistant aggregate an expanded graphite and a metal with the maximum amounts of 10% by mass and 8% by mass, respectively, followed by molding the resulting mixture and then by a heat treatment at a temperature of not lower than 1000°C. In the baked plate refractory thus produced, however, the metal added as an antioxidant does not have an effect to enhance the thermal shock resistance, so that the thermal shock resistance thereof is improved by adding the expanded graphite, but, the expanded graphite causes a deterioration of the oxidation resistance and a decrease in the strength, as well as an increase in roughness of a sliding part, thereby resulting in a decrease in the tolerance.

As the method for enhancing the corrosion and erosion resistances, a plate refractory called as a non-baked product or a light baked product (hereinafter, "non-baked" and "light baked" are collectively referred to as "non-baked") which is added with a metal having a low melting point and is produced by a heat treatment at a temperature not higher than 1000°C is proposed, for example, in Patent Document 2. Advantage of the non-baked plate refractory resides in a high hot strength and in the corrosion and erosion resistances to a melted steel owing to a large amount of an added metal. Contact of a refractory with a melted steel causes a reaction with the metal to produce a product which densifies the organization thereof in a neighborhood of an operation surface, so that infiltration of a slag can be suppressed. In addition, the non-baked plate refractory has an excellent characteristic in the FeO resistance. On the other hand, the organization is excessively densified by a heat which is received upon casting, resulting in a very high modulus; and thus there is a drawback of a low thermal shock resistance. Accordingly, there have been problems including an edge defect and an easy generation of a crack by a thermal shock.

In Patent Document 3, it is shown that the strength, the oxidation resistance, the corrosion and erosion resistances, and the thermal shock resistance of the refractory can be enhanced when a mass ratio of a carbon relative to an aluminum-containing metal is made in the range of 0.2 to 0.45 so as to cause the reaction of the carbon with the metal neither too much nor too little. However, this does not take into an account a volume increase due to the reactions that take place upon a heat receiving of a metal aluminum; an excessive densification causes a large increase in the modulus, and thus, the thermal shock resistance thereof is insufficient.

Patent Document 4 discloses how to obtain a plate without causing a slaking phenomenon by kneading and forming the blended material of aluminum powder composed of a refractory raw material, a phenol base resin and spheroidal atomized powder and executing the heat treatment in a specific temperature range.

[Citation List]

[Patent Documents]

Patent Document 1: Japanese Patent Laid-Open Publication No. 2003-245770
Patent Document 2: Japanese Examined Patent Publication No. S60-29664
Patent Document 3: Japanese Patent Laid-Open Publication No. 2012-200733
Patent Document 4: JP 2000 094121 A

[Summary of the Invention]

[Problems to be Solved by the Invention]

As described above, many attempts have been made to enhance the hot strength and the oxidation resistance thereby enhancing the corrosion and erosion resistances to a melted steel by including a metal aluminum into a refractory. However, with the conventional methods as mentioned above, not only a volume increase takes place by the reactions which occur when the metal aluminum receives a heat, but also a large increase in the modulus takes place because these reactions cause an excessive densification of the refractory organization; and as a result, problems including a decrease in the thermal shock resistance could not have been solved yet.

The problem to be solved by the present invention is to suppress destruction of a refractory which contains a metal aluminum.

[Means for Solving the Problems]

The present invention relates to a refractory for steel casting, a plate for a sliding nozzle device, and a method for producing the refractory for steel casting, as defined by the independent claims. The dependent claims describe preferred embodiments.

According to the present invention, in the refractory which contains 1 to 15% by mass, both inclusive, of a metal aluminum, destruction of a refractory organization can be suppressed by relaxing an expansion with a void inside the refractory organization, wherein the expansion is caused by a volume increase by the reactions which take place upon a heat receiving of the metal aluminum, and the degree of the expansion is such that the organization thereof may be destructed.

The reactions which take place upon a heat receiving of the metal aluminum are mainly reactions with a carbon monoxide and with a carbon. The term "upon a heat receiving of the metal aluminum" means during the time of a heat treatment in the production process or during the time of the use in the casting operation, that is, during the time of processing a steel. With these reactions, a carbide or an oxide is formed, so that the volume increases. Specifically, the metal aluminum reduces a carbon monoxide gas, thereby supplying a carbon to the refractory organization, and producing an aluminum carbide or an aluminum oxide as well. Meanwhile, the aluminum oxide is also produced by a reaction with an oxygen in an air. With these reactions, the refractory organization is densified thereby enhancing the strength thereof. As a result, the oxidation resistance as well as the corrosion and erosion resistances is enhanced, whereas the thermal shock resistance is prone to be deteriorated.

The reason why the metal aluminum content is made in the range of 1 to 15% by mass, both inclusive, is to express the effect to enhance the oxidation resistance and the strength, as well as the effect of densification, wherein these effects are insufficient when the content thereof is less than 1% by mass, and when the content thereof is more than 15% by mass, destruction or deterioration of the organization occurs due to excessive formation of the carbide or the oxide.

The reactions with a carbon monoxide and with a carbon which take place upon a heat receiving of the metal aluminum can be expressed by the following Equations.

$$2Al + 3CO \rightarrow Al_2O_3 + 3C \qquad \text{Equation 2}$$

$$4Al + 4CO \rightarrow Al_4O_4C + 3C \qquad \text{Equation 3}$$

$$4Al + 3C \rightarrow Al_4C_3 \qquad \text{Equation 4}$$

The volume increase ratios by these reactions are 135% (2.35 folds in volume), 115% (2.15 folds in volume), 0% (1.0 fold in volume, namely, the volume does not change), respectively. Meanwhile, the reason why the Equation 4 is zero is because the carbon is present in the refractory composition before the reaction of the metal aluminum, the total volume of the metal aluminum and the carbon before the reaction is the same as that after the reaction.

The incremental volume due to these reactions fills the voids present in the refractory, so that the refractory organization is densified. In due course, when the densification progresses to a certain degree at which the voids disappear, namely, when the volume increase that accompanies the reactions of the metal aluminum becomes more than the void volume present in the refractory before the reactions, the volume increase due to the reactions cannot be absorbed inside the refractory, resulting in the expansion or the destruction of the refractory itself.

Accordingly, in the present invention, the material is designed such that the incremental volume of the metal aluminum from before the reactions and after the reactions may not exceed the void volume present in the refractory before the reactions. However, if the void volume is left excessively inside the refractory in advance simply as the allowance to be absorbed for the incremental volume due to the reactions upon a heat receiving of the metal aluminum, properties including the oxidation resistance, the infiltration resistance, the corrosion and erosion resistances, and the abrasion resistance may be enhanced to some extent, but, the enhancements in these properties are not necessarily sufficient, and also these properties become unstable.

Accordingly, it is preferable to make such that the void volume present in the refractory before the reactions may be as near as possible to the incremental volume corresponding to the metal aluminum content before the reactions and yet the void volume may be approximately in a level not exceeding the incremental volume, because with this, not only the properties including the oxidation resistance, the infiltration resistance, the corrosion and erosion resistances, and the abrasion resistance can be maximized, but also the destruction or the excessive expansion of the refractory can be avoided, or an excessive increase in the modulus, eventually, a decrease in the thermal shock resistance can be avoided. It should be noted that the void volume in the refractory before the reactions in this case is sometimes referred to as simply "optimum volume".

The present invention provides the void volume in the refractory which is the optimum volume corresponding to the metal aluminum content in the refractory before the reactions, as described above.

In conventional technologies, there is no technological thought as described above; and therefore, in order to densify the refractory independently of the metal aluminum content, mainly impregnation with a liquid material such as a tar, which leaves a carbon after receiving a heat, has been carried out.

In the refractory organization obtained by impregnation with a tar or the like, the void thereof is filled with the carbon; and thus, this part becomes the void again when the carbon itself is oxidized. As a result, properties including the infiltration resistance, the corrosion and erosion resistances, the oxidation resistance, and the abrasion resistance deteriorate in many instances.

Also, most of the carbon which is formed by impregnation with a tar or the like as mentioned above forms a rigid, continuously bonding organization, and moreover, the bonding organization like this fills many voids, leading to an increase in the modulus of the refractory, thereby resulting in a decrease in the thermal shock resistance thereof in many instances.

The present invention resolves the drawbacks of the conventional technologies as mentioned above, and thus, provides the aforementioned minimum void volume in the refractory, the void volume corresponding to the metal aluminum content, without causing an increase in the void in the refractory that accompanies reoxidation and so forth of the carbon.

The volume increase due to the reactions of the metal aluminum can be expressed as following.

Because the density of the metal aluminum is 2.7 g·cm⁻³, the metal aluminum volume contained per 1 g of a refractory product can be expressed $\{1 \times (Al/100)\}/2.7$, provided that the metal aluminum content therein is designated by Al% by mass.

According to the empirical information of inventors of the present invention, who have balanced among experimental results until now, study results of the used articles in actual operations, and so forth, the volume increase rate due to the reactions of the metal aluminum shows about as same as the volume increase rate which is calculated on the assumption that the reactions of the Equation 2, the Equation 3, and the Equation 4 each take place with the ratio of almost 1:1:1. Then, because the volume increase rates each are 135%, 115%, and 0%, respectively, on the basis that the volume before the reactions is 100%, the increasing volume $\Delta V$ (cm³) can be expressed by the following Equation.

$$\Delta V = \{1 \times (Al/100)\}/2.7 \times \{(1.35 + 1.15 + 0)/3\} \qquad \text{Equation 5}$$

When this is put in order, the following Equation can be obtained.

$$\Delta V = 0.31 \times (Al/100) \qquad \text{Equation 6}$$

On the other hand, the void volume Vp in the refractory before the reactions of the metal aluminum in 1 g of the refractory can be expressed by the following Equation, provided that the bulk density of the refractory is designated by D and the apparent porosity of the refractory is designated by P%.

$$Vp = (1/D) \times \{(P-4)/100\} \qquad \text{Equation 7}$$

If this Vp is equal to or more than $\Delta$V, the incremental volume due to the reactions of the metal aluminum does not become more than the void volume of the refractory. This can be expressed by the following Equation 8 and Equation 9 from the Equation 6 and the Equation 7.

$$\Delta V \leq Vp \qquad \text{Equation 8}$$

$$0.31 \times (Al/100) \leq (1/D) \times \{(P-4)/100\} \qquad \text{Equation 9}$$

When this is put in order, the Equation 1 can be obtained.

$$0.31 \times Al \leq (P-4)/D \qquad \text{Equation 1}$$

If this equation is satisfied, the incremental volume, which corresponds to the metal aluminum content in the refractory and accompanies the reactions due to the heat receiving, can be absorbed within the apparent porosity of the refractory.

In the case that the both sides of the Equation 1 are equal, namely, in the case that the incremental volume of the metal aluminum is equal to the apparent porosity of the refractory which corresponds to an allowance of the volume to be absorbed, the value of this apparent porosity is a lower limit value at which the incremental volume of the metal aluminum does not excessively expand or destruct the refractory. In other words, when the right side is equal to or more than the lower limit value, the incremental volume due to the reactions of the metal aluminum neither increases the volume of the refractory to cause the excessive expansion nor destructs the refractory organization.

On the other hand, in order to enhance the thermal shock resistance, it is preferable that the right side be larger than the left side in the Equation 1. When the apparent porosity of the refractory, i.e., the void volume, is present more than the incremental volume due to the reactions of the metal aluminum, the excess voids suppress an increase of the modulus of the refractory after the reactions of the metal aluminum, or contributes to enhancement of the toughness thereof. However, if the difference between the right side and the left side becomes larger, there is a risk that the corrosion and erosion resistances, the strength, and so forth deteriorate; and thus, it is preferable to optimize in accordance with individual use conditions, requirements, and so forth.

The thermal shock becomes one factor to cause destruction of the refractory having experienced the heat receiving by subjecting the refractory to an operation at least once, namely, the refractory having experienced the volume increase by the reactions of the metal aluminum. Accordingly, the thermal shock resistance is effective as a barometer mainly for suppression of the destruction during the repeated use thereof.

Degree of the thermal shock is different depending on a preheating condition and so forth in an individual operation in which the refractory is used. Namely, the thermal shock resistance is the property to be optimized in accordance with individual operation conditions.

Meanwhile, the refractory of the present invention shows the characteristics in the state of a product, namely, in the state that the refractory is applied to a prescribed use thereof. In other words, the characteristics of the present invention is not limited to a specific temperature, but relate to the refractory (porosity, and so forth) in the state near the state in which the refractory is applied to a prescribed use, at least the expansion due to oxidation and the like of the metal aluminum can be absorbed.

The number "4" in the Equation 1 is a limit value of the decrease in the apparent porosity due to the reactions of the metal aluminum.

The limit value of the decrease in the apparent porosity due to the reactions of the metal aluminum was determined by experiments. When the alumina-carbon refractory with the metal aluminum content of 8% by mass and the apparent porosity of 5% was subjected to the heat treatment at 1500°C in a carbonaceous material, namely, in an atmosphere of a CO gas or a $CO_2$ gas, the apparent porosity was decreased to 4%. Also, when the alumina-carbon refractory with the metal aluminum content of 8% by mass and the apparent porosity of 4% was subjected to the heat treatment at 1500°C in the carbonaceous material, the apparent porosity stayed at 4%. That is, this shows that the decrease in the apparent porosity due to the reactions of the metal aluminum is limited until 4%. In other words, the volume increase due to the reactions of the metal aluminum can be absorbed in the refractory until the apparent porosity thereof reaches 4%.

There is a proportional relationship between the apparent porosity and the pore diameter to some extent; and it may be presumed that the densification due to the reactions of the metal aluminum does not contribute to the pore whose diameter is smaller than the pore diameter of the refractory organization whose apparent porosity is less than 4%; however, the mechanism of and the reason for this are not clear.

Meanwhile, the apparent porosity is the value measured by the measurement method of an apparent porosity described in JIS R 2205, using water or kerosene with a boiling method or with a vacuum method.

The aluminum content as a metal can be obtained from an X-ray diffraction. In the present invention, in order to minimize an outer disturbance thereby increasing an accuracy, standard specimens for various patterns were prepared, and the calculation curves thereof were prepared for quantification by an internal standard method.

In the present invention, within the afore-mentioned metal aluminum content range (residual amount), a metal aluminum-containing alloy may also be used. That is, the metal aluminum as a raw material contained in the powder which is mixed in the production of the refractory for steel casting according to the present invention may be made to a raw material including a simple metal aluminum, or part or all of the metal aluminum contained therein may be made to a raw material including a metal aluminum-containing alloy.

With regard to the metal aluminum-containing alloy, an aluminum-magnesium alloy or an aluminum-silicon alloy is preferable. Inventors of the present invention found from the experiments and so forth that when the aluminum-magnesium alloy or the aluminum silicon alloy as mentioned above is used, too, the relationship between the metal aluminum content (residual amount) and the porosity and so forth is effective if it follows the conditions described before.

In the refractory using these alloys, supposed that the residual amount of the metal aluminum is the same as the amount of the case which uses a raw material including a simple metal aluminum, a total amount of the metals contained in the production process (before the heat treatment) becomes, in a certain instance, substantially more than the amount of the case which uses the raw material including the simple metal aluminum. This is because in the case of the aluminum-magnesium alloy, the volume expansion ratio upon oxidation of Mg to MgO is smaller than Al, say about 20 to 30% relative to 100 as the index for Al, so that Mg does not exert a decisive effect to destruction of the refractory because of this. On the other hand, the volume expansion ratio in the case of using the aluminum-silicon alloy is larger than Al, say about 200% relative to 100 as the index for Al; however, in a high temperature range, the range around higher than about 1000°C, part or all of the Si component changes to SiO which undergoes evaporation thereby enhancing the porosity of the refractory. Therefore, Si does not give a decisive effect to destruction of the refractory because of this.

Because in these alloys, effects to enhance the strength and so forth from a low temperature region can be obtained more readily in the case of lower melting temperature, it is preferable to choose a composition in the neighborhood of an eutectic point. The melting temperatures of these alloys are about 430°C for the aluminum-magnesium alloy whose magnesium content is, for example, about 50% by mass, and about 480°C for the aluminum-silicon alloy whose silicon content is, for example, about 13% by mass. The melting points of these alloys are lower than the simple metal aluminum whose melting point is about 660°C. In these alloys, in the temperature range from above their melting temperature to the neighborhood of about 1000°C, almost all of the magnesium component and of the silicon component other than aluminum produce their oxides and so forth. Therefore, they hardly remain as a form of metal in the temperature range above the foregoing temperature range, or only a few even if they remain.

Meanwhile, these alloys may be used as a combination of them, or these alloys may be used as a combination with a simple metal aluminum.

[Advantageous Effects of Invention]

In the present invention, by correlating the metal aluminum content with the apparent porosity, namely, by relaxing the expansion which can almost destruct the organization with the voids in the refractory organization, destruction of the refractory organization can be suppressed; the destruction being caused by the volume increase due to the reactions which take place upon a heat receiving of the metal aluminum.

Further, by suppressing the densification and the increase in the modulus by the voids inside the refractory organization, the thermal shock resistance can be enhanced as well.

In order to suppress the destruction of the refractory organization, in conventional technologies, the methods have been employed which includes: a method in which the metal aluminum content is suppressed; a method in which a large amount of carbonaceous raw material including a graphite, which has an excellent thermal shock resistance, is used; and a method in which a large amount of a fire resistant aggregate is used. However, these conventional technologies cause deterioration of the corrosion and erosion resistances, the oxidation resistance, the abrasion resistance, and the like. Contrary to these conventional technologies, in the present invention, not only a large amount of the metal aluminum can be contained therein but also an excellent thermal shock resistance can be obtained, whereas there is no need to use a large amount of the fire resistant aggregate or of the carbonaceous raw material including a graphite; these materials deteriorate the corrosion and erosion resistances, the oxidation resistance, the abrasion resistance, and so forth.

As a result, the thermal shock resistance of the refractory can be retained or enhanced; and on top of it, the corrosion and erosion resistances, the oxidation resistance, the abrasion resistance, and so forth can be enhanced as well.

In addition, according to the method of the present invention, corresponding to the metal aluminum content, even the physical properties including the thermal shock resistance, the corrosion and erosion resistances, the oxidation resistance, and the abrasion resistance can be arbitrarily controlled for optimization in accordance with individual operation conditions.

The refractory of the present invention is suitable for an upper nozzle, a lower nozzle, a tuyere, a sliding nozzle plate for controlling of a flow rate, and so forth; these members are used for steel casting.

[Description of the Embodiments]

Embodiments of the present invention will be explained.

The foregoing "to satisfy the Equation 1" means in other words to control the apparent porosity of the refractory before the reactions of the metal aluminum.

Specifically, in order to obtain a prescribed (target) porosity,

(1) by increasing or decreasing a molding pressure during the time of a body molding thereby reducing the contact points among constituent raw materials or changing the contact distance and so forth, a filling rate thereof is controlled, and

(2) by displacing, with a prescribed amount, the granule composition of the body from a theoretical curve of the closest packing, the voids among constituent raw materials is increased or decreased with maintaining the contact points among constituent raw materials.

In the refractory of the present invention, there is no need to specify the conditions of the heat treatment to obtain the refractory so far as the refractory contains the metal aluminum with the content thereof being in the range of 1 to 15% by mass, both inclusive.

The particle diameter and the form of the metal aluminum can be selected in accordance with the characteristics described as follows. Namely, in view of the reactivity, the metal aluminum in a flake-like form is the best, but the flake-like form deteriorates a moldability. On the other hand, in view of a moldability, use of the metal aluminum in a granular-like form (sometimes this is referred to as "atomized") is preferable. Further, when the maximum length or the particle diameter of the metal aluminum is more than 140 $\mu$m, dispersion of the metal aluminum into the body is difficult, so that it becomes difficult to uniformly obtain an effect of the densification by the reactions of the metal aluminum; and therefore, the refractory can generate a crack due to an abnormal expansion in part of the refractory. Accordingly, the maximum length or particle diameter of the metal aluminum is preferably not more than 140 $\mu$m. Alternatively, use of the metal aluminum in the fiber-like form, which is highly effective for suppressing generation of the crack, is also effective. The metal aluminum in the fiber-like form is prone to be more difficult in dispersion as compared with that in a flake-like form or in a ball-like form. Although different depending on a kind and a method of a kneading machine and so forth, in order to enhance the dispersibility, preferably the maximum diameter thereof is not more than 200 $\mu$m and also the maximum length thereof is not more than 5 mm. The maximum diameter of more than 200 $\mu$m and the maximum length of more than 5 mm can cause poor flexibility, readily leading to a rough refractory organization, so that there is a risk of an excessively high porosity. In accordance with a balance between the moldability and the reactivity, as well as other needed characteristics, the metal aluminum in a flake-like form, a ball-like form, and a fiber-like form may be used as an arbitrary mixture of these forms. Meanwhile, in the case of the flake-like form, the thinner the thickness is, the higher the reactivity becomes. There is no restriction in the thickness thereof.

Also, the metal aluminum is needed to be present with the amount being in the range of 1 to 15% by mass, both inclusive, in the refractory after the heat treatment. The metal aluminum content in the body before molding may be made, for example, in the range of 1 to 20% by mass, both inclusive, in accordance with individual compositions, heat treatment conditions, and so forth, and then, the control may be made with the heat treatment conditions and so forth.

The metal aluminum is added to express the enhancing effects of the oxidation resistance and the strength, as well as the densification effect, wherein when the content thereof is less than 1% by mass, the oxidation resistance property is insufficient, and also the effect of the densification of an operation surface due to the reactions of the metal aluminum cannot be obtained clearly. When the content thereof is more than 15% by mass, deterioration of the organization can occur during the use thereof.

The content of the free carbon in the refractory of the present invention is made in the range of 1 to 10% by mass, both inclusive. In the present invention, the term "free carbon" means the carbon which is not in the form of a compound with other elements, and may be in any of crystalline and amorphous forms. A basic part of the bonding function of the refractory organization of the present invention is born by the carbon which is derived from a resin or the like. In order to form and keep the basic organization of the refractory, 1% or more by mass of the free carbon is needed. The carbon content of more than 10% by mass is not recommendable because of deterioration of the oxidation resistance.

The balance of the free carbon and the metal aluminum, the contents of them being in the range of 1 to 10% by mass, both inclusive, and 1 to 15% by mass, both inclusive, respectively, is composed of refractory materials including a metal oxide. Specifically, an optimum composition may be chosen in accordance with a kind of a steel and operation conditions including the use time thereof.

Meanwhile, the refractory materials including a metal oxide in the balance means a metal oxide, a carbide, a nitride, a metal, and the like, which are used as a raw material of the refractory for steel casing.

The metal oxide may be one or a plurality of components selected from, for example, $Al_2O_3$, $SiO_2$, $ZrO_2$, MgO, and $TiO_2$. Because an oxide of an alkaline metal or CaO forms a low melting point substance when these are present with $Al_2O_3$ or the like, use thereof as a main component is not recommendable except for the case when these are dispersed with the content of not more than a few percent by mass.

Specific usable example of the raw materials includes: a raw material mainly containing an $Al_2O_3$ component such as a corundum material; a refractory raw material containing, in addition to $Al_2O_3$, an $SiO_2$ component or an MgO component, such as a mullite material, sillimanite group materials (including andalusite and kyanite materials), a spinel material, and the like; and a raw material containing $ZrO_2$ in various forms. The $TiO_2$ component with the amount of not more than about 5% by mass may be used as a mineral including $TiO_2$ of a rutile form or the like with an aim to facilitate sintering and so forth, wherein this embodiment includes the case when the $TiO_2$ component is contained in a natural alumina raw material (bauxite, alum shale, and the like).

Alternatively, other than those contained in the raw material mainly containing the $Al_2O_3$ component, a raw material containing as a main component, in the case of the $SiO_2$ component, a single component of a mineral including an amorphous silica, a quarts, and a cristobalite, and in the case of the MgO component, a periclase or the like may be used as well.

With the aim to reinforce the oxidation preventive function at a high temperature, to control the modulus, or the like, the refractory of the present invention may further contain a carbide, a nitride, a metal, or the like, including SiC, SiN, $B_4C$, and BN.

The total amount of the metal oxide components is preferably not more than 95% by mass when the total amount of the balance is taken as 100% by mass. Namely, the total amount of the carbide, the nitride, and the metal, which are materials other than the metal oxides contained therein, impurities contained in the raw material, impurities contaminated in the manufacturing process, and the like is preferably less than 5% by mass. If the components other than these metal oxides are more than 5% by mass in the balance, deteriorations in the corrosion and erosion resistances, the thermal shock resistance, and so forth are prone to readily take place.

Meanwhile, in the operation in which the refractory of the present invention is used, there is a case that the refractory is used plural times (repeatedly), other than the case that the refractory is used only once. In the case of plural uses during which the temperature decreases, an aluminum carbide formed therein can be slaked (hydrated) to cause deterioration or destruction of the refractory organization. In order to suppress deterioration or destruction of the refractory organization due to slaking of the aluminum carbide like this, it is preferable to concurrently use a metal silicon with the amount thereof being in the range of 0.5 to 4% by mass, both inclusive, in the refractory. In the case of a carbon-containing refractory which contains a metal aluminum, the metal aluminum starts to react with the carbon to form the aluminum carbide in the temperature range of 700°C or higher; and because this aluminum carbide readily reacts with water at a normal temperature and a normal pressure to form aluminum hydroxide with increasing a volume and a weight, thereby leading to destruction of the refractory in many instances (slaking phenomenon). The silica formed by an oxidation reaction of the metal silicon forms a solid solution with the aluminum carbide, so that the slaking phenomenon of the aluminum carbide can be avoided. In addition, upon the heat receiving, the metal silicon initiates reactions including $Si+2CO \rightarrow SiO_2+2C$ to reduce a carbon monoxide gas; and the carbon thereby formed is supplied to the refractory organization, resulting in enhancement of the oxidation resistance. However, because the silica readily reacts with a melted steel or forms a low-melting point compound thereby causing a problem of a decrease in the corrosion and erosion resistances, the metal silicon content is preferably not more than 4% by mass. Meanwhile, the metal silicon not only contributes to avoiding of the slaking, but also has a preventing effect of oxidation of the refractory organization in a high temperature region (temperature region above approximately 1200°C).

The method for producing the refractory of the present invention will be explained.

In the refractory of the present invention, basically the same method as conventional production methods of a refractory which contains a metal aluminum or a metal aluminum alloy can be employed. In the method for producing the refractory of the present invention, the metal Al content in the refractory under the state in which the refractory is provided as a product is made basically in the range of 1 to 15% by mass, both inclusive, wherein the control thereof is made so as to satisfy the requirements of the present invention including the Equation 1. The body for molding is produced by adding 1 to 7% by mass, both inclusive, of a thermosetting resin including, for example, a phenol resin to a mixed powder including a refractory material which contains an aluminum-containing metal and the balance containing a metal oxide including one or plural components selected from $Al_2O_3$, $SiO_2$, $ZrO_2$, MgO, and $TiO_2$, and then, followed by kneading the resulting mixture.

A raw material of the aluminum-containing metal contained in the mixed powder may be in one form selected from a flake-like form having a maximum length of not more than 140 μm, a granular-like form having a particle diameter of not more than 140 μm, and a fiber-like form having a maximum diameter of a cross section thereof of not more than 200 μm and a maximum length of not more than 5 mm, or may be in plural forms selected from them for a concurrent use. Alternatively, a raw material including, in part or all thereof, the metal aluminum-containing alloy may be used as well. The metal aluminum-containing alloy in this case is preferably an aluminum-magnesium alloy or an aluminum-silicon alloy. Raw materials of these metals differ in the melting point and the reactivity, and depending on these properties, changes occur in physical properties of the refractory, including realization of the strength, the corrosion and erosion resistances, the thermal shock resistance, and the destruction resistance. Choice and combination of these raw materials of the metals can be arbitrarily adjusted depending on the individual operation condition as well as on the required characteristics (for example, the thermal shock resistance, the corrosion and erosion resistances, and the destruction resistance) corresponding to an individual need thereof.

In molding of these bodies, the apparent porosity may be controlled by a method including a method in which, for example, a molding pressure is controlled so as to satisfy the Equation 1. In order to control the value of the apparent porosity, an arbitrary method may be employed which includes a method in which an applied pressure or a compression allowance is changed during the time of molding, a method in which a volatile or a flammable liquid (including a colloid) or a superfine particulate is dispersed into the body, and a method in which a particle size or a form of the raw material is controlled.

There is no particular condition in the heat treatment so far as the metal Al content in the refractory after the heat treatment is made in the range of 1 to 15% by mass, both inclusive, as well as the Equation 1 is satisfied; and under these conditions, the conditions including a temperature may be set arbitrarily so as to comfort the conditions including individual operation and required conditions. For example, in a reducing atmosphere or in an inert gas atmosphere, the temperature may be optimized arbitrarily in the temperature region from the hardening temperature of a resin responsible for the carbon linkage to a temperature of about 1100°C. Even in the heat treatment at a temperature of higher than about 1200°C, in addition to control the heat treatment conditions including the atmosphere and the time, by controlling the conditions including a particle size of the metal aluminum and an embodiment of the presence thereof inside the refractory organization, the Equation 1 can be satisfied.

[Examples]

Hereunder, the refractory of the present invention will be explained by Examples and Comparative Examples.

[Example A]

Example A shows the study result of the relationship with the Equation 1 in the amount of the metal aluminum (Al) and the amount of the free carbon (F. C.) of the present invention.

A mixture prepared from a graphite, a metal aluminum, a phenol resin, and a refractory raw material including an alumina material mainly composed of a corundum was kneaded by using a mixer, and molded by using a 500-ton vacuum oil press to form a sliding nozzle plate, which is then followed by a heat treatment thereof at 800°C in a non-oxidative atmosphere to obtain a sample.

The aluminum content as a metal was quantified by an internal standard method using an X-ray diffraction.

To begin with, with regard to the problem to be solved by the present invention, namely, whether the destruction takes place or not was evaluated in the way as follows. Namely, after the sample obtained in the way as described above was subjected to the heat treatment at 1500°C in a carbonaceous material, namely in a reductive atmosphere, it was cooled; and then, the states of a crack and a defect at room temperature were observed for evaluation. When a crack was formed in part of the sample to a degree not retaining continuity thereof, it was judged to be unacceptable, and expressed by the symbol of × (bad) in the column of "Crack by pressing" in the Tables. Even though a slight crack or a crack was formed, when these were formed in the sample to a degree not losing the continuity, it was judged to be acceptable, and expressed by the symbol of ○ (good) in the Tables.

Also, after the sample was subjected to the heat treatment in a carbonaceous material at 1500°C, the sample was cooled to room temperature, and then, a modulus and an air permeation rate thereof were measured to study the change rates of these values before and after the heat treatment. The air permeation rate was measured by the method according to JIS R2115. The modulus was measured by a sonic method.

Further, the corrosion and erosion resistances and the thermal shock resistance were tested; and also, the properties to be possessed by a refractory, especially as the refractory for steel casting, were studied.

The corrosion and erosion resistances were measured with regard to the sample produced in the way as described above by a lining erosion test at 1600°C for 3 hours by using an ordinary steel or a mill scale as eroding materials, and the corrosion and erosion resistances were evaluated as a dissolution loss to be classified into four classes. Namely, Comparative Example 1 was taken as the standard, which has the corrosion and erosion resistances that are empirically considered to be a standard or a lower limit under a general operation condition; and when the corrosion and erosion resistances were about as same as the standard, this was expressed by the symbol of ○; when the resistances were superior to the standard, this was expressed by the symbol of ◎ (excellent); when the resistances were almost within a usable range but were worse than ○, this was expressed by the symbol of △ (fairly good); and when the resistances did not meet the standard, this was expressed by the symbol of × in the Tables.

The thermal shock resistance was evaluated as following; after the sample which was produced in the way as described above and had the size of 40×40×160 mm was soaked in a melted pig iron at 1600°C for 3 minutes, it was cooled by an air; and then, the amounts of the cracks were evaluated and classified into 4 classes. Namely, Comparative Example 1 was taken as the standard, which has the thermal shock resistance that is empirically considered to be a standard or a lower limit under a general operation condition; and when the thermal shock resistance was in the level just above the standard and was judged to be acceptable, this was expressed by the symbol of △; when the resistance was better than △, this was expressed by the symbol of ○; when the resistance was further better, this was expressed by the symbol of ◎; and when the resistance was about the same as or worse than Comparative Example 1, this was expressed by the symbol of × in the Tables.

The same is applied to the conditions and so forth in the following Examples B to F.

The composition and results of each sample are summarized in Table 1.

[Table 1]

| | Example | Example | Example | Comparative Example | Example | Example | Example | Comparative Example | Example | Example | Example | Comparative Example |
|---|---|---|---|---|---|---|---|---|---|---|---|---|
| | 1 | 2 | 3 | 1 | 4 | 5 | 6 | 2 | 7 | 8 | 9 | 3 |
| Temperature of heat treatment (°C) | 800 | 800 | 800 | 800 | 800 | 800 | 800 | 800 | 800 | 800 | 800 | 800 |
| Al2O3 (% by mass) | 97 | 97 | 97 | 97 | 89 | 89 | 89 | 89 | 74 | 74 | 74 | 74 |
| Metal Al (% by mass) | 1 | 1 | 1 | 1 | 6 | 6 | 6 | 6 | 15 | 15 | 15 | 15 |
| F. C. (% by mass) | 1 | 1 | 1 | 1 | 4 | 4 | 4 | 4 | 10 | 10 | 10 | 10 |
| Others (% by mass) | 1 | 1 | 1 | 1 | 1 | 1 | 1 | 1 | 1 | 1 | 1 | 1 |
| Bulk density | 3.2 | 3.1 | 3.2 | 3.2 | 3.1 | 3 | 3.1 | 3.1 | 2.9 | 2.8 | 2.9 | 3 |
| Apparent porosity (%) | 5.4 | 8.5 | 5.1 | 4.5 | 12 | 14.3 | 9.9 | 9.1 | 18.5 | 19.8 | 17.5 | 16.9 |
| Flexural modulus (Mpa) | 23 | 21 | 24 | 25 | 37 | 35 | 38 | 40 | 19 | 35 | 42 | 45 |
| 1. 0.31xAl | 0.3 | 0.3 | 0.3 | 0.3 | 1.9 | 1.9 | 1.9 | 1.9 | 4.7 | 4.7 | 4.7 | 4.7 |
| 2. (P-4)/D | 0.4 | 1.5 | 0.3 | 0.2 | 2.6 | 3.4 | 1.9 | 1.6 | 5.0 | 5.6 | 4.7 | 4.3 |
| Satisfaction of Equation 1 (*1) | Yes | Yes | Yes | No | Yes | Yes | Yes | No | Yes | Yes | Yes | No |
| Change rate of air permeation rate before and after the heat treatment in carbonaceous material at 1500°C (%) | -52 | -61 | -50 | -40 | -86 | -97 | -69 | -55 | -99 | -99 | -98 | -98 |

(continued)

| | Example | Example | Example | Comparative Example | Example | Example | Example | Comparative Example | Example | Example | Example | Comparative Example |
|---|---|---|---|---|---|---|---|---|---|---|---|---|
| | 1 | 2 | 3 | 1 | 4 | 5 | 6 | 2 | 7 | 8 | 9 | 3 |
| Modulus change rate before and after the heat treatment in carbonaceous material at 1500°C (%) | 23 | 16 | 30 | 42 | 18 | 14 | 29 | 73 | 25 | 12 | 27 | 54 |
| Test of thermal shock resistance | ○ | ◎ | Δ | × | ◎ | ◎ | Δ | × | ◎ | ◎ | ○ | × |
| Test of corrosion and erosion resistances | ○ | ○ | ○ | ○ | ◎ | ◎ | ◎ | ◎ | ○ | ○ | ○ | ○ |
| Crack by pressing (formed or not formed) | ○ | ○ | ○ | × | ○ | ○ | ○ | × | ○ | ○ | ○ | × |

*1: Yes, when Equation 1 was satisfied; No, when Equation 1 was not satisfied.

EP 3 112 054 B1

12

Meanwhile, the balance in the chemical components of Table 1 ("Others") is the inevitable impurities derived mainly from the raw material, wherein the impurities include $SiO_2$, $TiO_2$, and $R_2O$ (here, "R" represents an alkaline metal). These are contained with a very small amount, forming a compound and so forth, so that these hardly have an impact to the effects of the present invention. The same is applied to the balances in the chemical components in the following Examples B to F.

In any of Examples 1 to 9, in which the amounts of the metal aluminum and the free carbon each were minimum, medium, and maximum, while satisfying the Equation 1, there were no cracks by pressing. On the other hand, in Comparative Examples 1 to 3 which did not satisfy the Equation 1 in each case, the cracks by pressing were formed.

Meanwhile, all of Examples show excellent results which are better than the standard in the corrosion and erosion resistances with almost no problem, similarly to Comparative Example 1, in terms of the level as the condition to be possessed.

With regard to the thermal shock resistance, all of Examples show excellent results which are better than the standard as well as Comparative Examples; however, in Example 3, Example 6, and Example 9, in which the value of the left side is equal to the value of the right side in the Equation 1, the results were obtained which were slightly worse than other Examples in which the value of the right side is larger than the value of the left side in the Equation 1. From these results, it can be seen that in order to enhance the thermal shock resistance, it is preferable to make the right side larger relative to the left side in the Equation 1.

Meanwhile, the change rate of the air permeability is higher in the cases of 6% by mass and 15% by mass in the metal aluminum content as compared with the case of 1% by mass, namely, the formers have a denser organization. With regard to the thermal shock resistance and the corrosion and erosion resistances, too, the cases of 6% by mass and of 15% by mass in the metal aluminum contents gave better tendency in general as compared with the case of 1% by mass. From these results, it can be seen that when the metal aluminum content is higher, at least not less than 6% by mass, the effects of the present invention are expressed more, and thus it is more preferable.

[Example B]

Example B shows the study results of the effects of the metal aluminum content. In Table 2, compositions of the samples and the results are summarized.

[Table 2]

| | Comparative Example | Example | Example | Example | Example | Example | Comparative Example |
|---|---|---|---|---|---|---|---|
| | 4 | 10 | 11 | 12 | 13 | 14 | 5 |
| Temperature of heat treatment (°C) | 800 | 800 | 800 | 800 | 800 | 800 | 800 |
| Al2O3 (% by mass) | 94.5 | 94 | 91 | 89 | 85 | 80 | 79 |
| Metal Al (% by mass) | 0.5 | 1 | 4 | 6 | 10 | 15 | 16 |
| F. C. (% by mass) | 4 | 4 | 4 | 4 | 4 | 4 | 4 |
| Others (% by mass) | 1 | 1 | 1 | 1 | 1 | 1 | 1 |
| Bulk density | 3.2 | 3.2 | 3.2 | 3.1 | 3.1 | 2.8 | 2.8 |
| Apparent porosity (%) | 5.5 | 6.1 | 8.5 | 12 | 14.2 | 17.8 | 18.3 |
| Flexural modulus (Mpa) | 21 | 24 | 32 | 37 | 40 | 42 | 42 |
| 1. 0.31xAl | 0.2 | 0.3 | 1.2 | 1.9 | 3.1 | 4.7 | 5.0 |
| 2. (P-4)/D | 0.5 | 0.7 | 1.4 | 2.6 | 3.3 | 4.9 | 5.1 |
| Satisfaction of Equation 1 (*1) | Yes | Yes | Yes | Yes | Yes | Yes | Yes |

(continued)

| | Comparative Example | Example | Example | Example | Example | Example | Comparative Example |
|---|---|---|---|---|---|---|---|
| | 4 | 10 | 11 | 12 | 13 | 14 | 5 |
| Change rate of air permeation rate before and after the heat treatment in carbonaceous material at 1500°C (%) | -9 | -51 | -70 | -86 | -93 | -99 | -98 |
| Modulus change rate before and after the heat treatment in carbonaceous material at 1500°C (%) | 4 | 9 | 16 | 18 | 21 | 28 | 30 |
| Test of thermal shock resistance | ○ | ○ | ◎ | ◎ | ◎ | ○ | × |
| Test of corrosion and erosion resistances | × | ○ | ◎ | ◎ | ◎ | ◎ | × |
| Crack by pressing (formed or not formed) | ○ | ○ | ○ | ○ | ○ | ○ | ○ |
| *1: Yes, when Equation 1 was satisfied; No, when Equation 1 was not satisfied. | | | | | | | |

Example B, in which the metal aluminum content was changed from 0.5 to 16% by mass, shows that all of them satisfied the Equation 1 so that no crack by pressing was observed; however, in the case of 0.5% by mass in the metal aluminum content (Comparative Example 4), the corrosion and erosion resistances were ×, and in the case of 16% by mass (Comparative Example 5), both the thermal shock resistance and the corrosion and erosion resistances were ×. From these results, it can be seen that the appropriate content of the metal aluminum is in the range of 1 to 15% by mass.

Meanwhile, as is the case with Example A, it can be seen that a higher metal aluminum content, at least 4% of more by mass, is preferable because further higher improvement effects can be obtained in the thermal shock resistance and the corrosion and erosion resistances. It can also be seen that in order to increase the strength, the density, the corrosion and erosion resistances, and the like, the metal aluminum content as high as possible is preferable, and thus, the content of 6% or more by mass is more preferable.

[Example C]

Example C shows the study results of the effects of the free carbon content. In Table 3, compositions of the samples and the results are summarized.

[Table 3]

| | Comparative Example | Example | Example | Example | Comparative Example |
|---|---|---|---|---|---|
| | 6 | 15 | 4 | 16 | 7 |
| Temperature of heat treatment (°C) | 800 | 800 | 800 | 800 | 800 |
| Al2O3 (% by mass) | 92.5 | 92 | 89 | 83 | 82 |

(continued)

| | Comparative Example | Example | Example | Example | Comparative Example |
|---|---|---|---|---|---|
| | 6 | 15 | 4 | 16 | 7 |
| Metal Al (% by mass) | 6 | 6 | 6 | 6 | 6 |
| F. C. (% by mass) | 0.5 | 1 | 4 | 10 | 11 |
| Others (% by mass) | 1 | 1 | 1 | 1 | 1 |
| Bulk density | 3.2 | 3.2 | 3.1 | 2.8 | 2.8 |
| Apparent porosity (%) | 11.8 | 12.3 | 12 | 10.9 | 11.6 |
| Flexural modulus (Mpa) | 40 | 39 | 37 | 35 | 35 |
| 1. 0.31xAl | 1.9 | 1.9 | 1.9 | 1.9 | 1.9 |
| 2. (P-4)/D | 2.4 | 2.6 | 2.6 | 2.5 | 2.7 |
| Satisfaction of Equation 1 (*1) | Yes | Yes | Yes | Yes | Yes |
| Change rate of air permeation rate before and after the heat treatment in carbonaceous material at 1500°C (%) | -25 | -52 | -86 | -85 | -88 |
| Modulus change rate before and after the heat treatment in carbonaceous material at 1500°C (%) | 6 | 10 | 18 | 17 | 17 |
| Test of thermal shock resistance | × | ○ | ◎ | ◎ | ◎ |
| Test of corrosion and erosion resistances | × | ◎ | ◎ | ○ | × |
| Crack by pressing (formed or not formed) | ○ | ○ | ○ | ○ | ○ |
| *1: Yes, when Equation 1 was satisfied; No, when Equation 1 was not satisfied. | | | | | |

Example C, in which the free carbon content was changed from 0.5 to 11% by mass, shows that all of them satisfied the Equation 1 so that no crack by pressing was observed; however, in the case of 0.5% by mass (Comparative Example 6), both the thermal resistance and the corrosion and erosion resistances were ×, and in the case of 11% by mass (Comparative Example 7), the corrosion and erosion resistances were ×. From these results, it can be seen that the appropriate content of the free carbon is in the range of 1 to 10% by mass.

[Example D]

Example D shows the study results of the effects of the components (balance) other than the metal aluminum and the free carbon. In Table 4, compositions of the samples and the results are summarized.

[Table 4]

| | Example 17 | Example 18 | Example 19 | Example 20 | Example 21 | Example 22 | Example 23 | Example 24 | Example 25 | Example 26 | Example 27 |
|---|---|---|---|---|---|---|---|---|---|---|---|
| Temperature of heat treatment (°C) | 800 | 800 | 800 | 800 | 800 | 800 | 800 | 800 | 800 | 800 | 800 |
| Al2O3 (% by mass) | 87 | 83 | 79 | 79 | 87 | 83 | 79 | 79 | 88 | 88 | 88 |
| SiO2 (% by mass) | 2 Amorphous | 6 Amorphous | 10 Mullite | | | | | | | | |
| ZrO2 (% by mas) | | | | 10 | | | | | | | |
| MgO (% by mass) | | | | | 2 Periclase | 6 Periclase | 10 Periclase | 10 Spinel | | | |
| TiO2 (% by mass) | | | | | | | | | 1 | | |
| Metal Al (% by mass) | 6 | 6 | 6 | 6 | 6 | 6 | 6 | 6 | 6 | 6 | 6 |
| B4C (% by mass) | | | | | | | | | | 1 | |
| SiC (% by mass) | | | | | | | | | | | 1 |
| F. C. (% by mass) | 4 | 4 | 4 | 4 | 4 | 4 | 4 | 4 | 4 | 4 | 4 |
| Others (% by mass) | 1 | 1 | 1 | 1 | 1 | 1 | 1 | 1 | 1 | 1 | 1 |
| Bulk density | 3.1 | 3.1 | 3.0 | 3.3 | 3.1 | 3.1 | 3.1 | 3 | 3.1 | 3.1 | 3.1 |
| Apparent porosity (%) | 11.2 | 11.3 | 11.5 | 11.7 | 11.1 | 11.9 | 11.9 | 12.1 | 12.5 | 12.7 | 12.5 |
| Flexural modulus (Mpa) | 39 | 40 | 42 | 34 | 37 | 40 | 41 | 36 | 35 | 46 | 40 |
| 1. 0.31xAl | 1.9 | 1.9 | 1.9 | 1.9 | 1.9 | 1.9 | 1.9 | 1.9 | 1.9 | 1.9 | 1.9 |
| 2. (P-4)/D | 2.3 | 2.4 | 2.5 | 2.3 | 2.3 | 2.5 | 2.5 | 2.7 | 2.7 | 2.8 | 2.7 |
| Satisfaction of Equation 1 (*1) | Yes | Yes | Yes | Yes | Yes | Yes | Yes | Yes | Yes | Yes | Yes |

EP 3 112 054 B1

(continued)

| | Example 17 | Example 18 | Example 19 | Example 20 | Example 21 | Example 22 | Example 23 | Example 24 | Example 25 | Example 26 | Example 27 |
|---|---|---|---|---|---|---|---|---|---|---|---|
| Change rate of air permeation rate before and after the heat treatment in carbonaceous material at 1500°C (%) | -68 | -60 | -61 | -64 | -78 | -75 | -74 | -75 | -81 | -90 | -83 |
| Modulus change rate before and after the heat treatment in carbonaceous material at 1500°C (%) | -5 | 8 | 3 | 12 | -19 | 1 | 2 | 10 | 14 | 23 | 16 |
| Test of thermal shock resistance | ◎ | ◎ | ◎ | ○ | ○ | ○ | ○ | ○ | ◎ | ○ | ○ |
| Test of corrosion and erosion resistances | ○ | ○ | ○ | ○ | ◎ | ◎ | ◎ | ◎ | ○ | ○ | ○ |
| Crack by pressing (formed or not formed) | ○ | ○ | ○ | ○ | ○ | ○ | ○ | ○ | ○ | ○ | ○ |
| *1: Yes, when Equation 1 was satisfied; No, when Equation 1 was not satisfied. | | | | | | | | | | | |

Example 19 is the example in which a mullite is blended into part of a crude aggregate; Example 20 is the example in which an alumina zirconia clinker is blended into part of a crude aggregate; Example 24 is the example in which a spinel clinker is blended into part of a fine powder region; Example 25 is the example in which an alumina clinker containing a large amount of $TiO_2$ is blended into part of a crude aggregate; Example 26 is the example in which $B_4C$ is blended into part of a fine powder region; and Example 27 is the example in which SiC is blended into part of a fine powder region. Example 17 and Example 18 are the examples in which an amorphous silica fine powder is blended into part of a crude aggregate; and Example 21, Example 22, and Example 23 are the examples in which a periclase fine powder is blended into part of a crude aggregate.

All of Example 17 to Example 27 satisfied the Equation 1, and did not generate a crack by pressing.

All of the constituent raw materials having these components neither exert an eminent effect to the reactions of the metal aluminum nor cause eminent changes in the refractory's physical properties, especially in the apparent porosity; and thus, there were no cracks by pressing, thereby giving excellent results. Meanwhile, in accordance with a property and characteristic of each component, it can be seen that there are differences in the degrees of the thermal shock resistance and the corrosion and erosion resistances.

[Example E]

Example E shows the study results of the effects of a presence or an absence of the metal aluminum and of the content thereof. The slaking test was carried out in the way as follows. Namely, a sample was allowed to stand in a temperature-controlled chamber at 40°C with the humidity of 90°C; and the weight change rate between the sample's weight after passage of 30 days and the sample's weight before the treatment was measured for evaluation. With this method, the weight change rate of Example 29 was taken as the standard, which had the slaking resistance that was empirically considered to be a standard or about a lower limit under a general operation condition; and when the weight change rate was approximately the same or lower than the standard, this was expressed by the symbol of ○; and when the change rate was higher than the standard but was considered to be approximately in a level at which the sample can be used at least once under a usual operation condition, this was expressed by the symbol of △.

In Table 5, the compositions of the samples and the results are summarized.

[Table 5]

|  | Example 28 | Example 29 | Example 30 | Example 31 | Example 32 |
|---|---|---|---|---|---|
| Temperature of heat treatment (°C) | 800 | 800 | 800 | 800 | 800 |
| Al2O3 (% by mass) | 85 | 84.5 | 83 | 81 | 80 |
| Metal Al (% by mass) | 10 | 10 | 10 | 10 | 10 |
| Metal Si (% by mass) |  | 0.5 | 2 | 4 | 5 |
| F. C. (% by mass) | 4 | 4 | 4 | 4 | 4 |
| Others (% by mass) | 1 | 1 | 1 | 1 | 1 |
| Bulk density | 3.2 | 3.1 | 3.1 | 3.1 | 3.1 |
| Apparent porosity (%) | 14.3 | 14.5 | 14.2 | 13.9 | 14.2 |
| Flexural modulus (Mpa) | 38 | 38 | 36 | 35 | 36 |
| 1. 0.31xAl | 3.1 | 3.1 | 3.1 | 3.1 | 3.1 |
| 2. (P-4)/D | 3.2 | 3.4 | 3.3 | 3.2 | 3.3 |
| Satisfaction of Equation 1 (*1) | Yes | Yes | Yes | Yes | Yes |
| Change rate of air permeation rate before and after the heat treatment in carbonaceous material at 1500°C (%) | -55 | -93 | -97 | -97 | -98 |
| Modulus change rate before and after the heat treatment in carbonaceous material at 1500°C (%) | 12 | 18 | 21 | 23 | 22 |
| Slaking test | △ | ○ | ○ | ○ | ○ |
| Test of thermal shock resistance | ○ | ○ | ○ | ○ | ○ |

(continued)

|  | Example | Example | Example | Example | Example |
|---|---|---|---|---|---|
|  | 28 | 29 | 30 | 31 | 32 |
| Test of corrosion and erosion resistances | ◎ | ◎ | ◎ | ○ | △ |
| Crack by pressing (formed or not formed) | ○ | ○ | ○ | ○ | ○ |
| *1: Yes, when Equation 1 was satisfied; No, when Equation 1 was not satisfied.. | | | | | |

All of Example 28 to Example 32 satisfied the Equation 1, and did not generate a crack by pressing.

According to the slaking test results, Example 28 in which the metal silicon was absent was △; on the other hand, all of Example 29 to Example 32 in which the metal silicon was present were ○; and thus, the enhancement effect of the metal silicon to the slaking resistance can be recognized. Meanwhile, with regard to the metal silicon content, deterioration in the corrosion and erosion resistances was observed in Example 32 in which the metal silicon content was 5% by mass; and it is expected that the corrosion and erosion resistances be further deteriorated when the content thereof is more than this, and thus, the metal silicon content is preferably not more than 4% by mass.

[Example F]

Example F is the example in which the temperature of the heat treatment is significantly different. In Table 6, the compositions of the samples and the results are summarized.

[Table 6]

|  | Example | Example |
|---|---|---|
|  | 33 | 34 |
| Temperature of heat treatment (°C) | 500 | 1000 |
| Al2O3 (% by mass) | 87 | 94 |
| Metal Al (% by mass) | 8 | 1 |
| F. C. (% by mass) | 4 | 4 |
| Others (% by mass) | 1 | 1 |
| Bulk density | 3 | 3.2 |
| Apparent porosity (%) | 13.1 | 6.4 |
| Flexural modulus (Mpa) | 21 | 45 |
| 1. 0.31xAl | 2.5 | 0.3 |
| 2. (P-4)/D | 3.0 | 0.8 |
| Satisfaction of Equation 1 (*1) | Yes | Yes |
| Change rate of air permeation rate before and after the heat treatment in carbonaceous material at 1500°C (%) | -84 | -55 |
| Modulus change rate before and after the heat treatment in carbonaceous material at 1500°C (%) | 23 | 12 |
| Test of thermal shock resistance | ○ | ○ |
| Test of corrosion and erosion resistances | ◎ | ○ |
| Crack by pressing (formed or not formed) | ○ | ○ |
| *1: Yes, when Equation 1 was satisfied; No, when Equation 1 was not satisfied. | | |

Example 33 is the example in the temperature range lower than a melting point of the metal aluminum; and Example 34 is the example in the temperature range higher than a melting point of the metal aluminum but in the temperature range in which the reactions thereof are suppressed.

Both of Example 33 and Example 34 satisfied the Equation 1, and did not generate a crack by pressing. In addition, other properties (test results of the thermal shock resistance and of the corrosion and erosion resistances) were excellent.

[Example G]

Example G shows the examples in which part or all of the metal Al contained in the body (this is not the residual Al amount after the heat treatment) was replaced by the aluminum-magnesium alloy (Example 35 to Example 41), or by the aluminum-silicon alloy (Example 42 to Example 44).

Example 38 to Example 41 are the examples in which all of the metal contained in the body was replaced by the aluminum-magnesium alloy with different heat treatment conditions, wherein Example 38 and Example 39 were in a non-oxidative atmosphere at 800°C, and Example 40 and Example 41 were in a non-oxidative atmosphere at 500°C.

In Table 7, the compositions of the samples and the results are summarized.

[Table 7]

| | Example 35 | Example 36 | Example 37 | Example 38 | Example 39 | Example 40 | Example 41 | Example 42 | Example 43 | Example 44 |
|---|---|---|---|---|---|---|---|---|---|---|
| Temperature of heat treatment (°C) | 800 | 800 | 800 | 800 | 800 | 500 | 500 | 800 | 800 | 800 |
| Al2O3 (% by mass) | 89 | 89 | 90 | 92 | 89 | 89 | 85 | 89 | 89 | 90 |
| (residual) Metal Al (% by mass) | 6 | 6 | 5 | 3 | 6 | 6 | 10 | 6 | 6 | 5 |
| Metal Al in body (index 100 for Al) | 100 | 88 | 67 | 0 | 0 | 0 | 0 | 88 | 67 | 0 |
| Al-Mg alloy in body (index 100 for Al) | 0 | 12 | 33 | 100 | 100 | 100 | 100 | - | - | - |
| Al-Si alloy in body (index 100 for Al) | 0 | - | - | - | - | - | - | 12 | 33 | 100 |
| F. C. (% by mass) | 4 | 4 | 4 | 4 | 4 | 4 | 4 | 4 | 4 | 4 |
| Others (% by mass) | 1 | 1 | 1 | 1 | 1 | 1 | 1 | 1 | 1 | 1 |
| Bulk density | 3.0 | 3.0 | 3.0 | 2.9 | 2.9 | 2.9 | 2.8 | 3.1 | 3.1 | 3.0 |
| Apparent porosity (%) | 15.4 | 13.0 | 12.2 | 15.2 | 14.1 | 12.8 | 13.5 | 13.6 | 14.0 | 15.5 |
| Flexural modulus (Mpa) | 35 | 38 | 41 | 45 | 50 | 25 | 34 | 38 | 42 | 43 |
| 1. 0.31xAl | 1.9 | 1.9 | 1.6 | 0.9 | 1.9 | 1.9 | 3.1 | 1.9 | 1.9 | 1.6 |
| 2. (P-4)/D | 3.8 | 3.0 | 2.7 | 3.9 | 3.5 | 3.0 | 3.4 | 3.1 | 3.2 | 3.8 |
| Satisfaction of Equation 1 (*1) | Yes | Yes | Yes | Yes | Yes | Yes | Yes | Yes | Yes | Yes |
| Change rate of air permeation rate before and after the heat treatment in carbonaceous material at 1500°C (%) | -89 | -83 | -70 | -57 | -72 | -68 | -79 | -82 | -81 | -81 |
| Modulus change rate before and after the heat treatment in carbonaceous material at 1500°C (%) | 3 | 7 | 4 | -17 | 4 | 9 | 18 | -7 | 2 | 2 |
| Test of thermal shock resistance | ◎ | ◎ | ◎ | ◎ | ○ | ○ | ○ | ◎ | ◎ | ◎ |
| Test of corrosion and erosion resistances | ◎ | ◎ | ◎ | ○ | ◎ | ◎ | ◎ | ◎ | ○ | ○ |
| Crack by pressing (formed or not formed) | ○ | ○ | ○ | ○ | ○ | ○ | ○ | ○ | ○ | ○ |

*1: Yes, when Equation 1 was satisfied; No, when Equation 1 was not satisfied.

EP 3 112 054 B1

All of Example 35 and Example 44 satisfied the Equation 1, and did not generate a crack by pressing. In addition, other properties (test results of the thermal shock resistance and of the corrosion and erosion resistances) were excellent.

Meanwhile, in these Examples, eminent effects to the thermal shock resistance and to the corrosion and erosion resistances due to the difference in the replacement rate to the aluminum-magnesium alloy were not observed; and thus, it can be seen that there is no problem in the practical use thereof. Also, the tendency of a slight decrease in the thermal shock resistance was observed when the aluminum content was large; however, it can be seen that there is no problem in the practical use thereof.

On the other hand, it can be seen that when the replace rate to the aluminum-silicon alloy becomes larger, the thermal shock resistance tends to increase but the corrosion and erosion resistances tend to decrease. It is presumed that the Si component changes to $SiO_2$ which is low in the corrosion and erosion resistances, and moreover, the amount thereof increases, so that the refractory organization loses its density due to evaporation of the $SiO_2$ component.

[Example H]

Example H shows the results when the refractory of the present invention was used as the plate for the sliding nozzle device which is used in the continuous casting of a steel.

All the refractories used as the sample was made to have the metal aluminum content of 6% by mass, wherein Example 45 was made to satisfy the Equation 1, while Comparative Example 8 was made not to satisfy the Equation 1, and Comparative Example 9 was made not to satisfy the Equation 1 by subjecting Example 45 to a tar-impregnating treatment. These plates were installed to a 120-ton smelting pot, and each of them were used under the condition of repeated use for 6 times (ch).

As the barometers of the crack by pressing and the thermal shock resistance, "center crack" and "edge defect" were evaluated. "Center crack" is generated in a sliding direction in the plate's central part, which is the crack having a highly harmful effect to the life thereof. "Edge defect" is the destruction form wherein the defect is generated in the neighborhood of an intersecting portion of a wall surface of an inner hole (surface of a perpendicular direction) with a sliding surface (surface of a horizontal direction). Evaluations of the crack by pressing and the thermal shock resistance each were made by a visual observation; and the use result in actual operation in Comparative Example 8 was taken as the standard, wherein when the result was better than the level of Comparative Example 8, this was judged to be acceptable and expressed by the symbol of ○; when the result was far better than O, this was expressed by the symbol of ◎; and when the result was about in the same level as or worse than that of Comparative Example 8, this was expressed by the symbol of × in the Table.

Further, a damaged form focusing on disturbance of a sliding surface of the plate, namely, mainly focusing on the surface roughness due to the oxidation and so forth, was evaluated as "surface roughness". With regard to this "surface roughness", all of Example and Comparative Examples were excellent, and there were no problems; and thus, all of them were expressed by the symbol of ◎, meaning that all of them were excellent.

In Table 8, the compositions of the samples and the results are summarized.

[Table 8]

|  | Example | Comparative Example | Comparative Example |
|---|---|---|---|
|  | 45 | 8 | 9 |
| Temperature of heat treatment (°C) | 800 | 800 | 800 |
| Al2O3 (% by mass) | 88 | 88 | 87 |
| Metal Al (% by mass) | 6 | 6 | 6 |
| Metal Si (% by mass) | 1 | 1 | 1 |
| F. C. (% by mass) | 4 | 4 | 5 |
| Others (% by mass) | 1 | 1 | 1 |
| Impregnation with tar (*1) | No | No | Yes |
| Bulk density | 3.1 | 3.1 | 3.2 |
| Apparent porosity (%) | 12 | 9.1 | 5.7 |
| Flexural modulus (Mpa) | 37 | 40 | 51 |
| 1. 0.31xAl | 1.9 | 1.9 | 1.9 |

(continued)

| | | Example | Comparative Example | Comparative Example |
|---|---|---|---|---|
| | | 45 | 8 | 9 |
| 2. (P-4)/D | | 2.6 | 1.6 | 0.5 |
| Satisfaction of Equation 1 (*2) | | Yes | No | No |
| Change rate of air permeation rate before and after the heat treatment in carbonaceous material at 1500°C (%) | | -86 | -55 | -50 |
| Modulus change rate before and after the heat treatment in carbonaceous material at 1500°C (%) | | 18 | 73 | 75 |
| Results of use in actural furnace | Center crack | ◎ | × | × |
| | Surface roughness | ◎ | ◎ | ◎ |
| | Edge defect | ○ | × | × |
| | | | | Impregnation of tar to Example 45 |
| *1: Yes for with impregnation; No for without impregnation. *2: Yes, when Equation 1 was satisfied; No, when Equation 1 was not satisfied. | | | | |

The plate of Example 45 satisfied the Equation 1, so that a large crack of the center crack (stroke direction) which can exert a significant effect to a life as the plate was not generated. On the other hand, in the plate of Comparative Example 8 which did not satisfy the Equation 1, the center crack was generated, and in addition, an increasing tendency in the crack at the edge part could be observed; and in addition, the degree of the defect in the edge part of the sliding surface side of the inner hole was larger than that of the plate in Example 45.

Meanwhile, the plate of Comparative Example 9 which was obtained by subjecting the plate of Example 45 to the tar-impregnating treatment showed the same state as the plate of the Comparative Example 8.

With regard to the surface roughness (except for a neighborhood of the center crack), which is also a barometer of the corrosion and erosion resistances, good state was sustained in both Example and Comparative Examples.

**Claims**

1. A refractory for steel casting, wherein the refractory for steel casting comprises a refractory material containing a free carbon in the range of 1 to 10% by mass, both inclusive, a metal aluminum in the range of 1 to 15% by mass, both inclusive, and a metal oxide in a balance; and
the refractory for steel casting satisfies a following Equation 1, provided that a metal aluminum content in the refractory is designated by Al% by mass, an apparent porosity thereof is designated by P%, and a bulk density thereof is designated by D

$$0.31 \times Al \leq (P-4)/D \qquad \text{Equation 1,}$$

wherein the refractory for steel casting contains a metal silicon in the range of 0.5 to 4% by mass, both inclusive, and/or the metal aluminum content therein is in the range of 6 to 15% by mass, both inclusive.

2. The refractory for steel casting according to claim 1, wherein the metal oxide includes one or plurality of components selected from $Al_2O_3$, $SiO_2$, $ZrO_2$, $MgO$, and $TiO_2$; and a total amount of the components is 95% or more by mass when a total amount of the balance is taken as 100% by mass.

3. The refractory for steel casting according to any one of claims 1 to 2, wherein the metal aluminum content therein is in the range of 4 to 15% by mass, both inclusive.

4. A plate for a sliding nozzle device, wherein part or all thereof is composed of the refractory for steel casting according to any one of claims 1 to 3.

5. A method for producing a refractory for steel casting, wherein the method is to produce the refractory for steel casting according to any one of claims 1 to 3, and comprises: making a body for molding by adding 1 to 7% by mass, both inclusive, of a thermosetting resin to a mixed powder which comprises a refractory material containing an aluminum-containing metal and a metal oxide including one or plurality of components selected from $Al_2O_3$, $SiO_2$, $ZrO_2$, MgO, and $TiO_2$ in a balance, which is then followed by kneading a resulting mixture; press-molding the body for molding; and carrying out a heat treatment thereof; and also,
a metal aluminum content in the refractory after the heat treatment is made in the range of 1 to 15% by mass, both inclusive, and an apparent porosity is controlled so as to satisfy the Equation 1,
wherein the refractory for steel casting contains a metal silicon in the range of 0.5 to 4% by mass, both inclusive and/or the metal aluminum content therein is in the range of 6 to 15% by mass, both inclusive.

6. The method for producing the refractory for steel casting according to claim 5, wherein the aluminum-containing metal contained in the mixed powder is derived from a raw material comprising a simple metal aluminum with one or plural forms selected from a flake-like form having a maximum length of not more than 140 $\mu$m, a granular-like form having a particle diameter of not more than 140 $\mu$m, and a fiber-like form having a maximum diameter of a cross section thereof of not more than 200 $\mu$m and a maximum length of not more than 5 mm.

7. The method for producing the refractory for steel casting according to claim 5, wherein part or all of the aluminum-containing metal contained in the mixed powder is derived from a raw material comprising a metal aluminum-containing alloy.

8. The method for producing the refractory for steel casting according to claim 7, wherein the metal aluminum-containing alloy is an aluminum-magnesium alloy or an aluminum-silicon alloy.

**Patentansprüche**

1. Feuerfestmaterial für Stahlguss, wobei das Feuerfestmaterial für Stahlguss ein feuerfestes Material aufweist, das freien Kohlenstoff im Bereich von 1 bis 10 Masse-%, beide Werte eingeschlossen, ein Metallaluminium im Bereich von 1 bis 15 Masse-%, beide Werte eingeschlossen, und ein Metalloxid in einem Rest enthält, wobei
das Feuerfestmaterial für Stahlguss die folgende Gleichung 1 erfüllt, vorausgesetzt, dass ein Metallaluminiumgehalt im Feuerfestmaterial durch Al Masse-% bezeichnet wird, eine scheinbare Porosität davon durch P% bezeichnet wird und eine Schüttdichte davon durch D bezeichnet wird

$$0{,}31 \times Al \leq (P - 4)/D \quad \text{(Gleichung 1)},$$

wobei das Feuerfestmaterial für Stahlguss ein metallisches Silizium im Bereich von 0,5 bis 4 Masse-% enthält, beide Werte eingeschlossen, und/oder wobei der Metallaluminiumgehalt darin im Bereich von 6 bis 15 Masse-% liegt, beide Werte eingeschlossen.

2. Feuerfestmaterial für Stahlguss nach Anspruch 1, wobei das Metalloxid eine oder mehrere Komponenten enthält, die ausgewählt sind aus $Al_2O_3$, $SiO_2$, $ZrO_2$, MgO und $TiO_2$, und wobei eine Gesamtmenge der Komponenten 95 Masse-% oder mehr beträgt, wenn eine Gesamtmenge des Rests als 100 Masse-% angenommen wird.

3. Feuerfestmaterial für Stahlguss nach Anspruch 1 oder 2, wobei der Metallaluminiumgehalt darin im Bereich von 4 bis 15 Masse-% liegt, beide Werte eingeschlossen.

4. Platte für eine Schiebedüsenvorrichtung, wobei ein Teil davon oder die gesamte Schiebedüsenvorrichtung aus dem Feuerfestmaterial für Stahlguss nach einem der Ansprüche 1 bis 3 besteht.

5. Verfahren zum Herstellen eines Feuerfestmaterials für Stahlguss, wobei das Verfahren dazu dient, das Feuerfestmaterial für Stahlguss nach einem der Ansprüche 1 bis 3 herzustellen und aufweist: Herstellen eines Formkörpers durch Zugabe von 1 bis 7 Masse-%, beide Werte eingeschlossen, eines wärmehärtbaren Harzes zu einem Pulvergemisch, das ein feuerfestes Material aufweist, das ein aluminiumhaltiges Metall und ein Metalloxid enthält, das eine oder mehrere Komponenten enthält, die ausgewählt sind aus $Al_2O_3$, $SiO_2$, $ZrO_2$, MgO und $TiO_2$ in einem Rest, gefolgt von Kneten eines resultierenden Gemischs, Formpressen des Formkörpers und Ausführen einer Wärmebehandlung damit, wobei

auch veranlasst wird, dass ein Metallaluminiumgehalt im Feuerfestmaterial nach der Wärmebehandlung im Bereich von 1 bis 15 Masse-% liegt, beide Werte eingeschlossen, und eine scheinbare Porosität derart gesteuert wird, dass Gleichung 1 erfüllt ist,
wobei das Feuerfestmaterial für Stahlguss ein metallisches Silizium im Bereich von 0,5 bis 4 Masse-% enthält, beide Werte eingeschlossen, und/oder der Metallaluminiumgehalt darin im Bereich von 6 bis 15 Masse-% liegt, beide Werte eingeschlossen.

6. Verfahren zum Herstellen des Feuerfestmaterials für Stahlguss nach Anspruch 5, wobei das in dem Pulvergemisch enthaltene aluminiumhaltige Metall von einem Rohmaterial gewonnen wird, das ein einfaches Metallaluminium mit einer oder mehreren Formen aufweist, die ausgewählt sind aus einer plättchenartigen Form mit einer maximalen Länge von nicht mehr als 140 $\mu$m, einer granulatartigen Form mit einem Partikeldurchmesser von nicht mehr als 140 $\mu$m und einer faserartigen Form mit einem maximalen Durchmesser eines Querschnitts davon von nicht mehr als 200 $\mu$m und einer maximalen Länge von nicht mehr als 5 mm.

7. Verfahren zum Herstellen des Feuerfestmaterials für Stahlguss nach Anspruch 5, wobei ein Teil des aluminiumhaltigen Metalls oder das gesamte aluminiumhaltige Metall, das in dem Pulvergemisch enthalten ist, von einem Rohmaterial gewonnen wird, das eine metallaluminiumhaltige Legierung aufweist.

8. Verfahren zum Herstellen des Feuerfestmaterials für Stahlguss nach Anspruch 7, wobei die metallaluminiumhaltige Legierung eine Aluminium-Magnesium-Legierung oder eine Aluminium-Silizium-Legierung ist.

## Revendications

1. Réfractaire pour coulée d'acier, dans lequel le réfractaire pour coulée d'acier comprend un matériau réfractaire contenant du carbone libre dans la plage de 1 à 10 % en masse, les deux valeurs étant incluses, de l'aluminium métallique dans la plage de 1 à 15 % en masse, les deux valeurs étant incluses, et de l'oxyde métallique pour le reste ; et
le réfractaire pour coulée d'acier satisfait l'équation 1 suivante, à condition qu'une teneur en aluminium métallique dans le réfractaire soit désignée par % en masse de Al, une porosité apparente de celui-ci soit désignée par % de P, et une masse volumique en vrac soit désignée par D

$$0{,}31 \mathrm{x} Al \leq (P\text{-}4)/D \qquad \text{Équation 1,}$$

dans lequel le réfractaire pour coulée d'acier contient du silicium métallique dans la plage de 0,5 à 4 % en masse, les deux valeurs étant incluses, et/ou la teneur en aluminium métallique dans celui-ci est dans la plage de 6 à 15 % en masse, les deux valeurs étant incluses.

2. Réfractaire pour coulée d'acier selon la revendication 1, dans lequel l'oxyde métallique comporte un ou une pluralité de composants choisis parmi $Al_2O_3$, $SiO_2$, $ZrO_2$, MgO, et $TiO_2$ ; et une quantité totale des composants est de 95 % ou plus en masse lorsqu'une quantité totale du reste est prise à 100 % en masse.

3. Réfractaire pour coulée d'acier selon l'une quelconque des revendications 1 et 2, dans lequel la teneur en aluminium métallique dans celui-ci est dans la plage de 4 à 15 % en masse, les deux valeurs étant incluses.

4. Plaque pour un dispositif à buse coulissante, dans laquelle une partie ou la totalité de celle-ci est composée du réfractaire pour coulée d'acier selon l'une quelconque des revendications 1 à 3.

5. Procédé de production d'un réfractaire pour coulée d'acier, dans lequel le procédé consiste à produire le réfractaire pour coulée d'acier selon l'une quelconque des revendications 1 à 3, et comprend : la fabrication d'un corps pour moulage en ajoutant 1 à 7 % en masse, les deux valeurs étant incluses, d'une résine thermodurcissable à une poudre mélangée qui comprend un matériau réfractaire contenant un métal contenant de l'aluminium et un oxyde métallique comportant un ou une pluralité de composants choisis parmi $Al_2O_3$, $SiO_2$, $ZrO_2$, MgO et $TiO_2$ pour le reste, qui est ensuite suivie du pétrissage d'un mélange obtenu ; le moulage par pression du corps pour moulage ; et la réalisation d'un traitement thermique de celui-ci ; et également,

une teneur en aluminium métallique dans le réfractaire après le traitement thermique est amenée dans la plage de 1 à 15 % en masse, les deux valeurs étant incluses, et une porosité apparente est régulée de manière à satisfaire l'équation 1,
dans lequel le réfractaire pour coulée d'acier contient un silicium métallique dans la plage de 0,5 à 4 % en masse, les deux valeurs étant incluses, et/ou la teneur en aluminium métallique dans celui-ci est dans la plage de 6 à 15 % en masse, les deux valeurs étant incluses.

6. Procédé de production du réfractaire pour coulée d'acier selon la revendication 5, dans lequel le métal contenant de l'aluminium contenu dans la poudre mélangée est dérivé d'un matériau brut comprenant un aluminium métallique simple avec une ou plusieurs formes choisies parmi une forme de type flocon ayant une longueur maximale ne dépassant pas 140 μm, une forme de type granulaire ayant un diamètre de particule ne dépassant pas 140 μm, et une forme de type fibre ayant un diamètre maximal d'une section transversale de celle-ci ne dépassant pas 200 μm et une longueur maximale ne dépassant pas 5 mm.

7. Procédé de production du réfractaire pour coulée d'acier selon la revendication 5, dans lequel une partie ou la totalité du métal contenant de l'aluminium contenu dans la poudre mélangée est dérivée d'un matériau brut comprenant un alliage contenant de l'aluminium métallique.

8. Procédé de production du réfractaire pour coulée d'acier selon la revendication 7, dans lequel l'alliage contenant de l'aluminium métallique est un alliage aluminium-magnésium ou un alliage aluminium-silicium.

**EP 3 112 054 B1**

**REFERENCES CITED IN THE DESCRIPTION**

**Patent documents cited in the description**

- JP 2003245770 A
- JP S6029664 B
- JP 2012200733 A
- JP 2000094121 A

27